# EUROPÄISCHE PATENTSCHRIFT

(11) **EP 3 724 056 B1**
(45) Veröffentlichungstag und Bekanntmachung des Hinweises auf die Patenterteilung: **06.10.2021**
(21) Anmeldenummer: 18829769.1
(22) Anmeldetag: 13.12.2018
(51) Int. Cl.: B62D 1/181

(54) **ELEKTRISCH VERSTELLBARE LENKSÄULE FÜR EIN KRAFTFAHRZEUG**
ELECTRICALLY ADJUSTABLE STEERING COLUMN FOR A MOTOR VEHICLE
COLONNE DE DIRECTION À RÉGLAGE ÉLECTRIQUE CONÇUE POUR UN VÉHICULE AUTOMOBILE

(30) Priorität: 15.12.2017 DE 102017222976
(43) Veröffentlichungstag der Anmeldung: 21.10.2020
(73) Patentinhaber: thyssenkrupp Presta AG, 9492 Eschen (LI); thyssenkrupp AG, 45143 Essen (DE)
(72) Erfinder: SCHMIDT, René Marco, 9464 Lienz (CH); TEMPLIN, Kevin, Fishers, Indiana 46038 (US); KIRMSSE, Helmut, 9494 Schaan (LI)
(74) Vertreter: thyssenkrupp Intellectual Property GmbH
(86) Internationale Anmeldenummer: PCT/EP2018/084768
(87) Internationale Veröffentlichungsnummer: WO 2019/115696

(56) Entgegenhaltungen:
- US-A- 4 691 587
- US-A- 5 590 565

## Beschreibung

Die Erfindung betrifft eine verstellbare Lenksäule für ein Kraftfahrzeug, mit einer zur drehbaren Lagerung eines Spindelteils einer Lenkspindel bestimmten Manteleinheit, welche in einer Halteeinrichtung axial gleitend und/oder schwenkbar gelagert und mittels eines motorischen Antriebs axial und/oder verschwenkbar verstellbar ist, wobei der motorische Antrieb einen an der Halteeinrichtung befestigten Elektromotor aufweist, der eine in einer Axialrichtung axial ausgerichtete, an der Halteeinrichtung drehbar gelagerte und axial unverschiebbar gelagerte Gewindespindel antreibt, die in eine mit der Manteleinheit verbundene und mit dieser gegenüber der Halteeinrichtung axial verschiebbare Stellmutter eingreift, die in einem an der Manteleinheit befestigten Befestigungsteil gelagert ist, um Axialkräfte von der Stellmutter auf die Manteleinheit zu übertragen.

Aus der DE 10 2015 216 715 A1 ist eine solche elektrisch verstellbare Lenksäule bekannt. Um ein Verkanten der Stellmutter zu vermeiden, ist diese bei der bekannten Lenksäule um eine zur Drehachse der Gewindespindel orthogonale Achse schwenkbar gelagert. Andere Ausführungsformen einer schwenkbaren Lagerung der Stellmutter sind aus der WO 2017 139 627 A1 bekannt. Es hat sich allerdings herausgestellt, dass die schwenkbare Lagerung der Stellmutter allein nicht ausreicht, um ein Verklemmen der Stellmutter in allen praktisch vorkommenden Betriebszuständen zu verhindern, insbesondere wenn die Bauteile des motorischen Antriebs größere Fertigungstoleranzen aufweisen. Das Dokument US4691587 offenbart eine Lenksäule gemäß dem Oberbegriff des Anspruchs 1.

Aufgabe der Erfindung ist es daher, eine verstellbaren Lenksäule mit motorischem Antrieb der eingangs genannten Art anzugeben, bei der die Verstellung mit möglichst geringem Kraftaufwand bzw. Drehmomentaufwand und bei möglichst geringen Anforderungen an die Bauteiltoleranzen möglich ist.

Die erfindungsgemäße Lösung sieht vor, dass die Stellmutter zwischen gegenüberliegenden inneren Führungsflächen des Verbindungsteils mit Spiel geführt ist, so dass sie innerhalb der Führungsflächen in einer zur Axialrichtung orthogonalen Ebene verschiebbar ist. Durch die erfindungsgemäße Verschiebbarkeit der Stellmutter gegenüber dem Verbindungsteil kann sich die Stellmutter jeweils optimal an die Lage und Bewegung der Gewindespindel und deren Auslenkungen von der Drehachse anpassen. Derartige Auslenkungen können bei einer nicht exakt gerade ausgerichteten Gewindespindel entstehen. Für große Verstellwege sind lange Gewindespindeln erforderlich, bei denen die genannten Auslenkungen erheblich sein können.

Bei der erfindungsgemäßen Lenksäule kann die Halteeinrichtung durch einen Führungskasten, in dem die Manteleinheit axial gleitend gelagert ist, oder durch eine Halteteil, das die Manteleinheit schwenkbar lagert, gebildet sein. Es ist auch denkbar und möglich, eine Kombination zu bilden, bei der der Führungskasten, als Kastenschwinge am Halteteil schwenkbar gelagert ist und die Manteleinheit axial gleitend lagert.

Wenn im weiteren Verlauf einfach von Führungskasten die Rede ist, sind alle genannten Varianten darunter subsummiert.

In einer ersten und zweiten bevorzugten Ausführungsform der Erfindung ist die Stellmutter zwischen einer ersten inneren Führungsfläche und einer dieser gegenüberliegenden zweiten inneren Führungsfläche des Verbindungsteils in einer zu Axialrichtung orthogonalen ersten Verschieberichtung verschiebbar. Durch diese Maßnahme können gegebenenfalls vorkommende Abweichungen der Lage der Gewindespindel durch Verschieben der Stellmutter ausgeglichen werden. In weiterer vorteilhafter Ausgestaltung des ersten Ausführungsbeispiels ist zwischen der ersten inneren Führungsfläche des Verbindungsteils und einer benachbarten ersten äußeren Oberfläche der Stellmutter sowie zwischen der zweiten inneren Führungsfläche des Verbindungsteils und einer benachbarten zweiten äußeren Oberfläche der Stellmutter jeweils mindestens ein Federelement angeordnet. Durch das Federelement kann die Stellmutter zwischen den inneren Führungsflächen des Verbindungsteils zentriert werden. Außerdem verhindern die Federelemente Klappergeräusche, die auftreten könnten, wenn die Stellmutter infolge von im Fahrbetrieb auftretenden Vibrationen gegen die inneren Führungsflächen des Verbindungsteils schlägt.

In einer dritten bevorzugten Ausführungsform ist vorgesehen, dass die Stellmutter zwischen einer dritten inneren Führungsfläche und einer dieser gegenüberliegenden vierten inneren Führungsfläche des Verbindungsteils in einer zur Axialrichtung und der ersten Verschieberichtung orthogonale zweite Verschieberrichtung verschiebbar ist. Diese Maßnahme hat den Vorteil, dass die Stellmutter nicht nur in die erste Verschieberrichtung oder zweite Verschieberichtung verschiebbar ist, sondern in jede durch Kombination der beiden Verschiebungen erreichbaren Richtung, die innerhalb einer zur Axialrichtung orthogonalen Ebene liegt. Auf diese Weise ist ein störungsfreies Gleiten der Stellmutter auf der sich drehenden Gewindespindel auch unter extrem ungünstigen Betriebsbedingungen gewährleistet.

Auch bei der dritten Ausführungsform ist es von Vorteil, wenn zwischen der dritten inneren Führungsflächen des Verbindungsteils und einer benachbarten dritten äußeren Oberfläche der Stellmutter sowie zwischen der vierten inneren Führungsfläche des Verbindungsteils und einer benachbarten vierten äußeren Oberfläche der Stellmutter jeweils mindestens ein Federelement angeordnet ist.

Eine vorteilhafte Weiterbildung des ersten Ausführungsbeispiels sieht vor, dass die Stellmutter am Verbindungsteil um eine zu Axialrichtung orthogonale Achse drehbar gelagert ist. Insbesondere wenn die zur Axialrichtung orthogonale Achse mit der ersten Verschieberichtung übereinstimmt, erhält man eine Anordnung, bei der Abweichungen der relativen Lage der Bauteile zueinander weitgehender ausgleichbar sind als bei einer Anordnung, die allein ein Verkippen der Stellmutter und keine seitliche Verschiebung vorsieht.

Eine vierte vorteilhafte Ausführungsform der Erfindung sieht vor, dass die Stellmutter zwischen einer fünften inneren Führungsfläche und einer dieser gegenüberliegenden sechsten inneren Führungsfläche des Verbindungsteils in Axialrichtung verschiebbar angeordnet ist, wobei zwischen der fünften inneren Führungsfläche des Verbindungsteils und einer benachbarten fünften äußeren Oberfläche der Stellmutter sowie zwischen der sechsten inneren Führungsfläche des Verbindungsteils und einer benachbarten sechsten äußeren Oberfläche der Stellmutter jeweils mindestens ein Federelement angeordnet ist. Durch die zusätzliche Verschiebbarkeit in Axialrichtung in Verbindung mit einer oder beiden Verschiebungswegen in die erste und/oder zweite Verschieberichtung wird ein Verkippen der Stellmutter ermöglicht, ohne dass diese drehbar gelagert sein muss. Darüber hinaus kann das Verkippen in jede beliebige Richtung erfolgen. Zusammen mit der Verschiebbarkeit der Stellmutter quer zur Axialrichtung können jegliche Lageabweichungen der Stellmutter relativ zur Gewindespindel durch die erfindungsgemäße Lagerung der Stellmutter ausgeglichen werden.

Bevorzugte Ausführungsformen der Federelemente sehen vor, dass diese als Wellfeder, Tellerfeder, Spiralfeder oder Blattfeder ausgestaltet sind. Eine alternative vorteilhafte Ausführungsform sieht vor, dass die Federelemente aus Elastomer oder Gummi bestehen.

Weiterhin kann es dennoch vorgesehen sein, dass die Stellmutter um eine senkrecht zur Axialrichtung ausgerichteten Verschieberichtung drehbar in dem Verbindungsteil gelagert ist. Dadurch sind noch weitere Kompensationen von Toleranzen möglich.

Bei der Auslegung der Lenksäule kann in entsprechenden Toleranzbetrachtungen und/oder in Versuchen bestimmt werden, welche der Ausführungsformen für den jeweiligen Lenksäulentyp eingesetzt werden soll.

Vorteilhafte Ausführungsbeispiele der Erfindung werden nachfolgend anhand der Zeichnungen näher erläutert. Die Figuren zeigen im Einzelnen:
- Figur 1:: eine perspektivische Ansicht einer erfindungsgemäßen verstellbaren Lenksäule in einer ersten Ausführungsform;
- Figur 2:: eine perspektivische Ansicht eines motorischen Antriebs für die Längsverstellung der Lenksäule in Axialrichtung in der ersten Ausführungsform;
- Figur 3:: ein motorischer Antrieb gemäß Figur 2, mit demontiertem Verbindungsteil;
- Figur 4:: eine teilweise geschnittene Draufsicht aus Richtung V von Figur 3 des erfindungsgemäßen Verbindungsteils in einer ersten Ausführungsform mit darin kippbar gelagerter Stellmutter;
- Figur 5:: eine Draufsicht aus Richtung VI von Figur 3 des Verbindungselements von Figur 5;
- Figur 6:: eine perspektivische Ansicht einer zweiten Ausführungsform einer erfindungsgemäßen verstellbaren Lenksäule;
- Figur 7:: eine perspektivische Ansicht eines motorischen Antriebs für die Längsverstellung der Lenksäule in Axialrichtung entsprechend der zweiten Ausführungsform, die in Figur 6 veranschaulicht ist;
- Figur 8:: ein motorischer Antrieb gemäß Figur 7, mit demontiertem Verbindungsteil, entsprechend der zweiten Ausführungsform;
- Figur 9:: eine perspektivische Ansicht einer Wellfeder;
- Figur 10:: eine teilweise geschnittene Draufsicht aus Richtung V von Figur 8 des erfindungsgemäßen Verbindungsteils in einer zweiten Ausführungsform mit darin kippbar gelagerter Stellmutter;
- Figur 11:: eine Draufsicht aus Richtung VI von Figur 3 des Verbindungselements von Figur 10;
- Figur 12:: eine teilweise geschnittene Draufsicht aus Richtung V von Figur 8 eines erfindungsgemäßen Verbindungsteils in einer dritten Ausführungsform, bei der die Stellmutter in einer ersten Verschieberichtung B verschiebbar gelagert ist, in einer Ansicht analog zur Figur 10;
- Figur 13:: das Verbindungsteil in der dritten Ausführungsform von Figur 12 in einer Draufsicht aus Richtung VI von Figur 8;
- Figur 14:: eine teilweise geschnittene Draufsicht aus Richtung V von Figur 8 eines Verbindungsteils in einer vierten Ausführungsform, bei der die Stellmutter sowohl in die erste Verschieberichtung B als auch in die zweite Verschieberichtung C verschiebbar gelagert ist, in einer Ansicht analog zur Figur 10;
- Figur 15:: das Verbindungsteil von Figur 14 in einer Draufsicht analog zu Figur 11;
- Figur 16:: eine teilweise geschnittene Ansicht aus Richtung V von Figur 8 eines Verbindungsteilst in einer fünften Ausführungsform, bei der die Stellmutter neben der ersten Verschieberichtung B und der zweiten Verschieberichtung C auch in die Axialrichtung A verschiebbar gelagert ist, in einer Ansicht analog zur Figur 10;
- Figur 17:: das Verbindungsteil von Figur 16 in einer Draufsicht VI von Figur 8, analog zu Figur 11;
- Figur 18:: eine perspektivische Ansicht einer Schraubenfeder;
- Figur 19:: eine Darstellung des Verbindungsteils in einer sechsten Ausführungsform, analog der Ausführungsform von Figur 10, wobei die Wellfedern durch Schraubenfedern ersetzt sind;
- Figur 20:: eine Darstellung des Verbindungsteils in einer siebten Ausführungsform, analog der Ausführungsform von Figur 10, wobei die Wellfedern durch Tellerfedern ersetzt sind;
- Figur 21:: eine Darstellung des Verbindungsteils in einer achten Ausführungsform, analog der Ausführungsform von Figur 10, wobei die Funktion der Elastizität mittels der Wellfedern durch die Elastizität der Blechteile 17 und 18 ersetzt ist.

Gleiche oder gleichartige Teile für verschiedene Ausführungsformen der Erfindung werden in den folgenden Figuren mit gleichen Bezugszeichen bezeichnet.

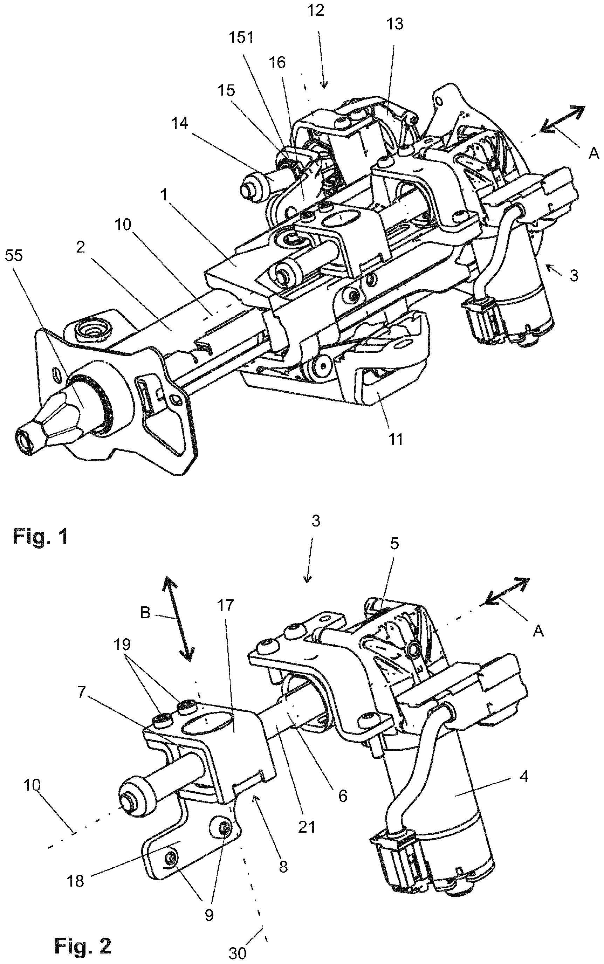

In den Figuren 1 bis 5 wird ein erstes Ausführungsbeispiel der Erfindung dargestellt.

Die in Figur 1 dargestellte verstellbare Lenksäule besitzt einen Führungskasten 1, in dem eine Manteleinheit 2 in Axialrichtung A längsverschiebbar gelagert ist. Die Manteleinheit 2 ist für die drehbare Lagerung einer Lenkspindel 55 vorgesehen, welche zwei ineinander teleskopierbare Spindelteile aufweist. Dabei ist ein Spindelteil axial unverschieblich und das andere Spindelteil axial verschieblich. Das axial verschiebliche Spindelteil ist in der Manteleinheit 2 drehbar gelagert und verschiebt sich zusammen mit der Manteleinheit 2 in Axialrichtung A, wenn die Manteleinheit 2 selbst axial verschoben wird.

Für die axiale Verstellung der Lenksäule ist ein motorischer Antrieb 3 vorgesehen, der in Figur 2 dargestellt ist. Der motorische Antrieb 3 weist einen Elektromotor 4, ein Getriebe 5, eine Gewindespindel 6 mit einem Außengewinde 21, eine Stellmutter 7 und ein Verbindungsteil 8 auf, welches mittels Befestigungsschrauben 9 an der Manteleinheit 2 befestigt ist. Der Elektromotor 4, das Getriebe 5 und die Gewindespindel 6 sind am Führungskasten 1 befestigt. Wenn der Elektromotor 4 betätigt wird, dreht er über das Getriebe 5 die Gewindespindel 6 um die Drehachse 10, welche die Axialrichtung A definiert. Dabei wird die auf der Gewindespindel 6 sitzende Stellmutter 7 in Axialrichtung A verschoben, je nach Drehrichtung des Elektromotors 4 nach vorne oder nach hinten. Die Stellmutter 7 ist im Verbindungsteil 8 gelagert. Das Verbindungsteil 8 wird daher bei einer Verschiebung der Stellmutter 7 in Axialrichtung A mitgenommen und verschiebt dabei die Manteleinheit 2, welche über die Verbindungsschrauben 9 fest mit dem Verbindungsteil 8 verbunden ist, in Axialrichtung A.

Der Führungskasten 1 ist an einem mit der Karosserie des Kraftfahrzeugs fest verbundenen Halteteil 11 schwenkbar gelagert, so dass es nach oben oder unten verkippbar ist. Auf diese Weise kann das nicht gezeigte Lenkrad nach oben oder unten verstellt werden. Für die Höhenverstellung ist ein Höhenverstellantrieb 12 vorgesehen, der ähnlich zum motorischen Antrieb 3 aufgebaut ist. Auch der Höhenverstellantrieb 12 besitzt einen nicht gezeigten Elektromotor, ein Getriebe 13 und eine Gewindespindel 14, auf der eine Stellmutter 15 angeordnet ist. Die Stellmutter 15 ist mit einem Schwenkarm 16 über ein zweites Verbindungsteil 151 verbunden, der die Verschwenkung des Führungskastens 1 gegenüber dem Halterteil 11 bewirkt. Das zweite Verbindungsteil 151 kann in gleicher Weise ausgebildet sein, wie das unten ausführlich beschriebene Verbindungsteil 8 und die gleichen Funktionen im Zusammenspiel mit der Stellmutter 15 darstellen.

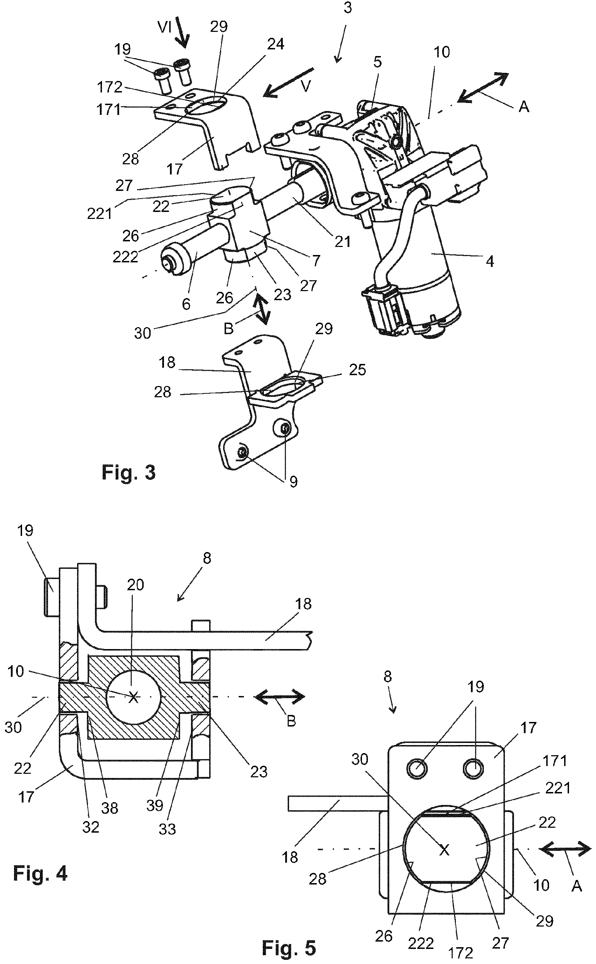

Wie man am besten in den Figuren 2 und 3 erkennt, umfasst im Beispiel das Verbindungsteil 8 zwei gestanzte Blechteile 17,18, die mittels Verbindungsschrauben 19 miteinander verschraubt sind.

Die Stellmutter 7 hat die Grundform eines Würfels, durch den eine Gewindebohrung 20 hindurchgeht. Die Gewindespindel 6 ist mit einem Außengewinde 21 versehen, welches in die Gewindebohrung 20 der Stellmutter 7 eingeschraubt ist. Daher bewegt sich die Stellmutter 7 in Axialrichtung A, wenn die Gewindespindel 6 über den Elektromotor 4 und das Getriebe 5 gedreht wird. Des Weiteren ist die Stellmutter 7 an zwei gegenüberliegenden Seiten jeweils mit einem Vorsprung 22, 23 versehen. Der Vorsprung 22 wird in einer Ausnehmung 24 des Blechteils 17 und der Vorsprung 23 in einer Ausnehmung 25 des Blechteils 18 aufgenommen, so dass die Stellmutter 7 im Verbindungsteil 8 gelagert ist. Dabei sind die Vorsprünge 22, 23, die auch Zapfen genannt werden können, zumindest in ihren im Wesentlichen in Axialrichtung A ausgerichteten Seitenbereichen 26, 27 teilkreisförmig ausgestaltet. Mit den teilkreisförmigen Seitenbereichen 26, 27 liegen die Vorsprünge 22, 23 an entsprechend ausgeformten teilkreisförmigen Innenflächen 28, 29 der Ausnehmungen 24, 25 an. Durch die Anlage des teilkreisförmigen Seitenbereichs 26 an der teilkreisförmigen Innenfläche 28 bzw. des teilkreisförmigen Seitenbereich 27 an der teilkreisförmigen Innenfläche 29 kann die Stellmutter 7 Verschiebekräfte in Axialrichtung A auf das Verbindungsteil 8 übertragen. Da das Verbindungsteil 8 mittels Befestigungsschrauben 9 mit der Manteleinheit 2 fest verbunden ist, werden die Verschiebekräfte in Axialrichtung A auch auf die Manteleinheit 2 übertragen, so dass bei einer Verschiebung der Stellmutter 7 auf der Gewindespindel 6 eine Verschiebung der Manteleinheit 2 gegenüber dem Führungskasten 1 in Axialrichtung A bewirkt werden kann. Wie im Beispiel dargestellt sind die flachen Seiten 221 und 222 in Führungsseiten 171 und 172 gehalten, so dass eine Verdrehung der Stellmutter 7 in dem Verbindungsteil 8 um die Achse 30 begrenzt oder sogar verhindert ist.

Es ist aber möglich und denkbar, die Führungsseiten 171 und 172 wegzulassen und die Ausnehmungen 24 und 25 kreisrund auszubilden, so dass die Stellmutter 7 in Folge der teilkreisförmigen Ausgestaltung der Seitenbereichen 26, 27 derer Vorsprünge 22, 23 in Verbindung mit den Innenflächen 28, 29 der Ausnehmungen 24, 25 des Verbindungsteils 8 eine Verdrehung um eine orthogonal zur Axialrichtung A ausgerichtete Achse 30, zumindest um einen kleinen Winkel, zulässt. Dadurch kann eine weitere Reduktion eines Verklemmens der Stellmutter 7 infolge einer ungenau ausgerichteten Drehachse 10 der Gewindespindel 6 erreicht werden.

Zu einer solchen Fehlstellung, die zu einem Verklemmen der Stellmutter 7 führen kann, kann es durch fertigungsbedingte Toleranzen oder durch Verformung beteiligter Bauteile infolge von auf sie einwirkenden Kräften oder Drehmomenten im Fahrbetrieb des Kraftfahrzeugs kommen.

Wie man am besten in Figur 4 erkennt, ist die Stellmutter 7 zwischen den gegenüberliegenden den Blechteilen 7 und 18 des Verbindungsteils 8 entlang der Vorsprünge 22 und 23 in den Innenflächen 18, 29 mit Spiel geführt, so dass sie innerhalb des Verbindungsteils 8 in einer zu Axialrichtung A orthogonalen Ebene verschiebbar ist.

Die Figuren 4 und 5 zeigen ein erstes Ausführungsbeispiel, bei dem die Stellmutter 7 zwischen einer ersten inneren Führungsfläche 32 und einer dieser gegenüberliegenden zweiten inneren Führungsfläche 33 des Verbindungsteils 8 in einer zur Axialrichtung A orthogonalen ersten Verschieberichtung B verschiebbar ist.

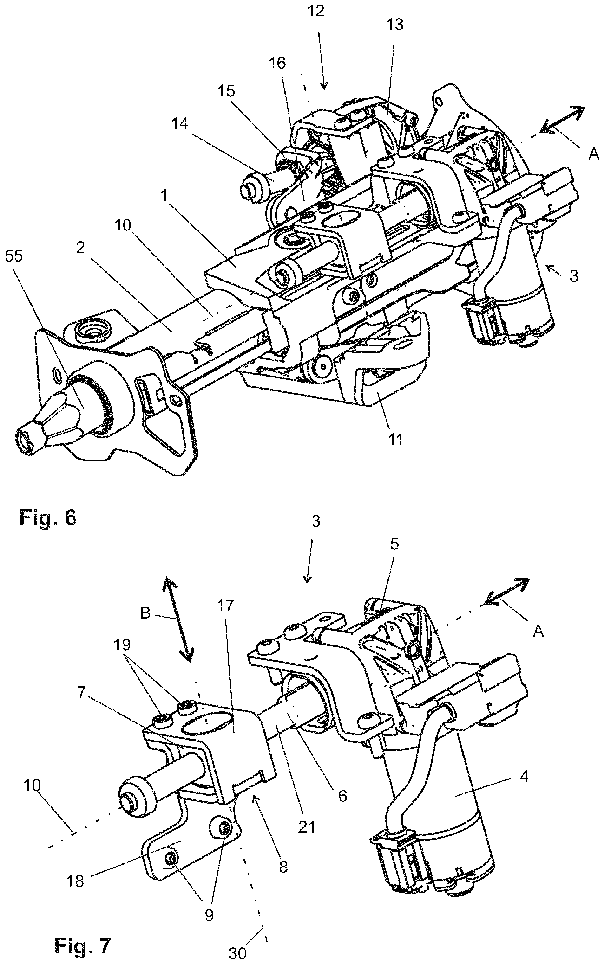

Figuren 6 bis 8 zeigen eine Darstellung, wie sie für das zweite, bis siebte Ausführungsbeispiel anwendbar ist. In diesen Ausführungsbeispielen sind, zusätzlich zu der in der ersten Ausführungsform vorgesehenen Lösung, Federelemente an verschiedenen Positionen vorgesehen. Entsprechend zeigen die Darstellungen in den Figuren 6 bis 8 weitgehend identisch die gleichen Merkmale, wie die Figuren 1 bis 3, so dass im Folgenden zur Vermeidung von Wiederholungen nur die Unterschiede beschrieben werden.

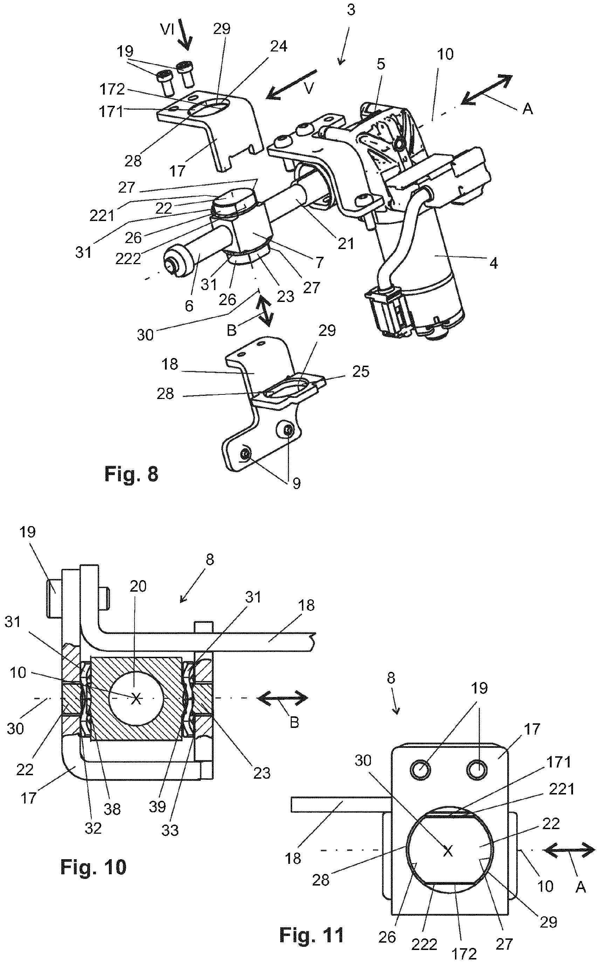

Auf diese Figuren 6 bis 8 sind jeweils die weiteren Ausführungsbeispiele referenziert. In der Figur 8 ist repräsentativ als federndes Element eine Tellerfeder 31, dessen Funktion weiter unten ausgeführt wird.

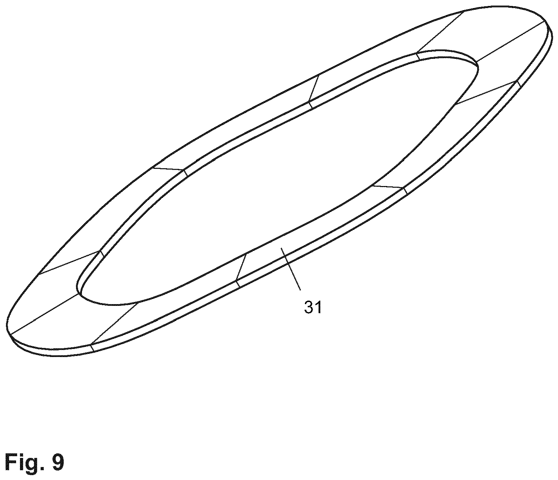

Das zweite Ausführungsbeispiel ist in den Figuren 9 bis 11 veranschaulicht.

Entsprechend der zweiten Ausführungsform sind als Dämpfungs- und Zentrierungselemente Wellfedern 31 vorgesehen. In Figur 9 erkennt man eine Wellfeder 31. Solche Wellfedern 31 werden bei der vorliegenden Erfindung zur Zentrierung der Stellmutter 7 in ihren Führungen des Verbindungteils 8 verwendet. Die Wellfedern 31 dienen auch zur Vermeidung von Klappergeräuschen, die infolge von Vibrationen auftreten können, die im Fahrbetrieb des Kraftfahrzeugs erzeugt werden. Die Wellfedern 31 sind kreisringförmig und leicht gewellt ausgestaltet. Sie sind daher geeignet unter Kräften einzufedern, die orthogonal zu einer durch die Ringfläche der Wellfedern 31 definierten Ebene stehen. Es ist dabei denkbar und möglich, mit Kunststoff oder einem Elastomer beschichtete Wellfedern 31 einzusetzen, um die Geräuschbildung zu reduzieren.

Wie man am besten in Figur 10 erkennt, ist die Stellmutter 7 zwischen gegenüberliegenden inneren Führungsflächen 32, 33 des Verbindungsteils 8 mit Spiel geführt, so dass sie innerhalb der Führungsflächen 32, 33 in einer zu Axialrichtung A orthogonalen Ebene verschiebbar ist.

Die Figuren 10 und 11 zeigen ein zweites Ausführungsbeispiel, bei dem die Stellmutter 7 zwischen einer ersten inneren Führungsfläche 32 und einer dieser gegenüberliegenden zweiten inneren Führungsfläche 33 des Verbindungsteils 8 in einer zur Axialrichtung A orthogonalen ersten Verschieberichtung B verschiebbar ist. Dabei ist zwischen der ersten inneren Führungsfläche 32 des Verbindungsteils 8 und einer zu ihr benachbarten ersten äußeren Oberfläche 38 der Stellmutter 7 genauso wie zwischen der zweiten inneren Führungsfläche 33 des Verbindungsteils 8 und einer dazu benachbarten zweiten äußeren Oberfläche 39 der Stellmutter 7 jeweils ein Federelement in Form einer Wellfeder 31 angeordnet. Diese Konstruktion ermöglicht eine federnde Bewegung der Stellmutter 7 in Verschieberichtung B entlang der Achse 30. Die Führung in die anderen Dimensionen ist durch die Lagerung der Vorsprünge 22 und 23 in den Ausnehmungen 24 und 25 dargestellt.

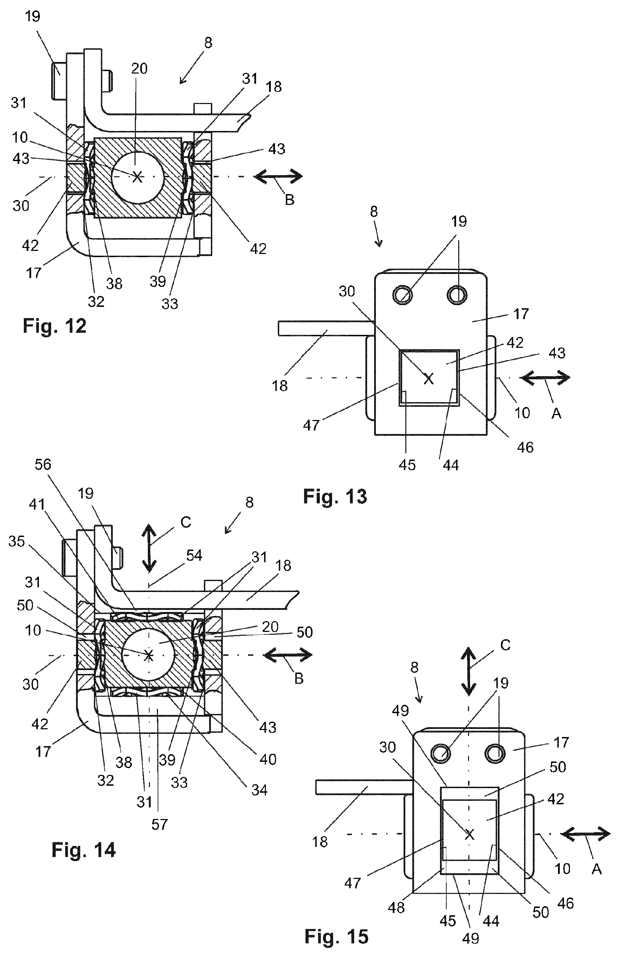

Bei dem in den Figuren 12 und 13 gezeigten dritten Ausführungsbeispiel sind die Vorsprünge 42 im Querschnitt nicht kreiszylindrisch oder teilweise kreiszylindrisch, sondern rechteckig, insbesondere quadratisch, ausgebildet. Dabei unterscheidet sich die Ansicht gemäß Figur 12 grundsätzlich nicht von der Ansicht der Figur 10. Bezüglich der Verschiebbarkeit in die erste Verschieberichtung B hat das zweite Ausführungsbeispiel eine identische Funktion, die daher zur Vermeidung von Wiederholungen ausgelassen wird. Auch die zu den Vorsprüngen 42 zugehörigen Ausnehmungen 43 im Blechteil 17 des Verbindungsteils 8 sind quadratisch im Querschnitt. Der Vorsprung 42 ist mit Spiel in der Ausnehmung 43 aufgenommen. Der Vorsprung 42 hat einen vorderen Seitenbereich 44, der in Axialrichtung A an einer vorderen Innenfläche 46 der Ausnehmung 43 anliegt. Ein hinterer Seitenbereich 45 des Vorsprungs 40 liegt an einer hinteren Innenfläche 47 der Ausnehmung 43 an. Auf diese Weise können Verschiebekräfte in Axialrichtung A von der Stellmutter 7 auf das Verbindungsteil 8 und schließlich auf die Manteleinheit 2 übertragen werden.

Mit dem in den Figuren 14 und 15 gezeigten vierten Ausführungsbeispiel ist zusätzlich zur Verschiebung in die erste Verschieberichtung B eine Verschiebung in eine zweite Verschieberichtung C vorgesehen, die im Beispiel orthogonal zur ersten Verschieberichtung B ausgerichtet ist. Die Verschiebung in die erste Verschieberichtung B ist analog zum oben beschriebenen ersten Ausführungsbeispiel. Die Verschiebung in die zweite Verschieberichtung C wird dadurch ermöglicht, dass die Stellmutter 7 zwischen einer dritten inneren Führungsfläche 34 und einer dieser gegenüberliegenden vierten inneren Führungsfläche 35 des Verbindungsteils 8 mit Spiel angeordnet ist, so dass sie in einer zur Axialrichtung A und der ersten Verschieberichtung B jeweils orthogonalen zweiten Verschieberichtung C verschiebbar ist. Zur Ausbildung der vierten inneren Führungsfläche 35 ist ein zusätzliches Bauteil 56 und zur Ausbildung der dritten inneren Führungsfläche 34 ist ein zusätzliches Bauteil 57 vorgesehen. Diese Bauteile können als separate, beispielsweise aus Kunstsoff gebildete Bauteile ausgebildet sein. Es ist aber auch denkbar und möglich, diese Führungsflächen 34, 35 direkt an dem Blechteil 17 oder 18 anzuformen.

Im Beispiel ist zwischen der dritten inneren Führungsfläche 34 des Verbindungsteils 8 und einer zu dieser benachbarten dritten äußeren Oberfläche 40 der Stellmutter 7 sowie zwischen der vierten inneren Führungsfläche 35 des Verbindungsteils 8 und einer dazu benachbarten vierten äußeren Oberfläche 41 der Stellmutter 7 jeweils wieder eine Wellfeder 31 angeordnet. Dadurch wird eine federnde Bewegung der Stellmutter 7 in die zweite Verschieberichtung C gegenüber dem Verbindungsteil 8 ermöglicht.

In Figur 15 ist eine modifizierte Ausnehmung 48 veranschaulicht, deren Abmessungen in die zweite Verschieberichtung C größer sind als die in Verschieberichtung A. Zwischen dem Vorsprung 42 der Stellmutter 7 und der in die zweite Verschieberichtung C liegenden seitlichen Innenfläche 49 der Ausnehmung 48 bleibt genügend Spielraum 50, um die Verschiebung der Stellmutter 7 in Verschieberichtung B gegenüber dem Verbindungsteil 8 zu ermöglichen. Die vordere Innenfläche 46 bzw. hintere Innenfläche 47 nimmt dabei jeweils die von dem vorderen Seitenbereich 44 bzw. dem hinteren Seitenbereich 45 des Vorsprung 42 der Stellmutter 7 übertragenen Längsverstellkräfte in Axialrichtung A auf.

Die in dem vierten Ausführungsbeispiel dargestellten Wellfedern 31 können prinzipiell alle oder teilweise entfallen. Der Einsatz von elastischen oder federnden Elementen ist zur Verringerung der Geräuschbildung günstig, muss aber je nach Ausführung nicht unbedingt erforderlich sein.

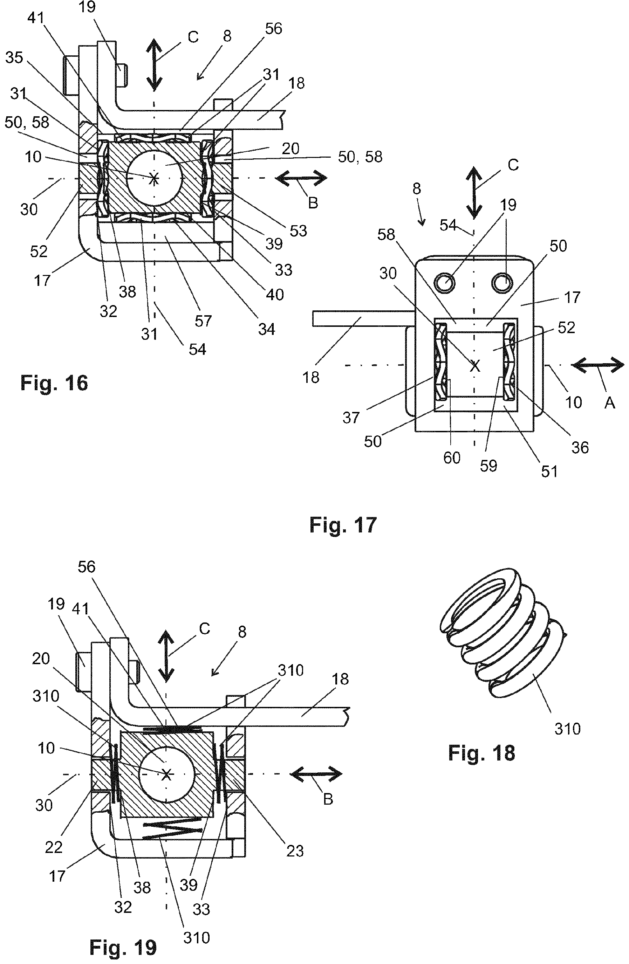

Bei einem in den Figuren 16 und 17 gezeigten fünften Ausführungsbeispiel der Erfindung ist zusätzlich zur Verschiebbarkeit der der Stellmutter 7 in der ersten Verschieberichtung B und der zweiten Verschieberichtung C eine Verschiebbarkeit entlang der Axialrichtung A vorgesehen. In dieser vierten Ausführungsform sind die Verschiebbarkeiten in der ersten Verschieberichtung B und der zweiten Verschieberichtung C wie in der dritten Ausführungsform realisiert.

Zusätzlich sind die Ausnehmungen 58 in den Blechteilen 17 und 18 zur Aufnahme der Vorsprünge 52 und 53 so groß, dass in Achsrichtung 10 und in Achsrichtung 54 ein Spielraum 50 entsteht, so dass eine Beweglichkeit in diese Achsrichtungen entsteht. Der Vorsprung 52 der Stellmutter 7 hat auch im vierten Ausführungsbeispiel einen quadratischen Querschnitt. Auch die Spielräume 50 zur Ermöglichung der seitlichen Verschiebung in Verschieberichtung B sind unverändert. Eine nochmals modifizierte Ausnehmung 51 des Verbindungsteils 8 ist hier im Wesentlichen quadratisch ausgestaltet. Zwischen einer fünften inneren Führungsfläche 36 und einer dieser gegenüberliegenden sechsten inneren Führungsfläche 37 des Verbindungsteils 8 ist der Vorsprung 42 der Stellmutter 7 in Axialrichtung A verschiebbar angeordnet, wobei zwischen der fünften inneren Führungsfläche 36 des Verbindungsteils 8 und einer dazu benachbarten fünften äußeren Oberfläche 59 der Stellmutter 7 sowie zwischen der sechsten inneren Führungsfläche 37 des Verbindungsteils 8 und einer dazu benachbarten sechsten äußeren Oberfläche 60 der Stellmutter 7 jeweils mindestens ein Federelement 31 angeordnet ist. Dadurch ist das Verbindungsteil 8 auf der Stellmutter 7 in allen drei Dimensionen entsprechend der Axialrichtung A und den beiden Verschieberichtungen B und C elastisch mit der Stellmutter 7 verbunden. Die zusätzliche elastische Verbindung in Axialrichtung A zwischen der Stellmutter 7 und dem Verbindungsteil 8 hat den Vorteil, dass die Stellmutter 7 im harten Alltagsbetrieb des Kraftfahrzeugs Verspannungen gegenüber der Gewindespindel 6 nicht nur durch Ausweichen in Verschieberichtung B oder in Verschieberichtung C, sondern auch durch Verkippen vermeiden kann. Dabei kann die Stellmutter 7 nicht nur um die parallel zur Verschieberichtung B angeordnete Drehachse 30, sondern auch um eine parallel zur Verschieberichtung C angeordnete Drehachse 54 oder ein beliebige andere Drehachse gekippt werden.

Selbstverständlich kann als Federelement 31 nicht nur die in Figur 4 dargestellte Wellfeder 31 verwendet werden, sondern es sind auch alle anderen geeigneten Formen von Federelementen möglich, insbesondere Tellerfedern, Spiralfeder oder Blattfedern. Des Weiteren können die genannten Federn auch durch Federelemente aus elastomeren Material oder Gummi ersetzt werden. Es ist auch denkbar mit einem Elastomer oder Gummi oder Kunststoff beschichtete Federelemente einzusetzen.

Durch die Erfindung werden mehrere Freiheitsgrade zur Verschiebung oder Verkippung der Stellmutter 7 eröffnet, die im Stand der Technik nicht möglich sind. In vorteilhafter Weise können dadurch Verkantungen und Verklemmungen der Stellmutter 7 auf der Gewindespindel 6 vermieden werden, die ansonsten zu erhöhter Reibung, größeren Verstellkräften, stärkerem Verschleiß oder gar Blockade des Längsverstellantriebs der Lenksäule führen könnten. Dabei sind die erfindungsgemäßen Maßnahmen so einfach auszuführen, dass der damit verbundene Fertigungsaufwand und die Fertigungskosten gering bleiben.

In allen oben genannten Ausführungsbeispielen können die als Beispiel genannten Federelemente oder elastischen Elemente in Form von Wellfedern 31 durch andere elastische Elemente, wie Tellerfedern 320, durch Spiralfedern 310 oder sogar durch die Elastizitäten in den in Kontakt stehenden Blechteilen oder durch die Elastizität der Stellmutter 7 zu ersetzen. Am Beispiel der Ausführungsform nach Figur 16 sind die verschiedenen Möglichkeiten in den Figuren 18 bis 20 veranschaulicht.

Im sechsten Ausführungsbeispiel entsprechend den Figuren 18 und 19 sind als federndes Element Spiralfedern 310 eingesetzt.

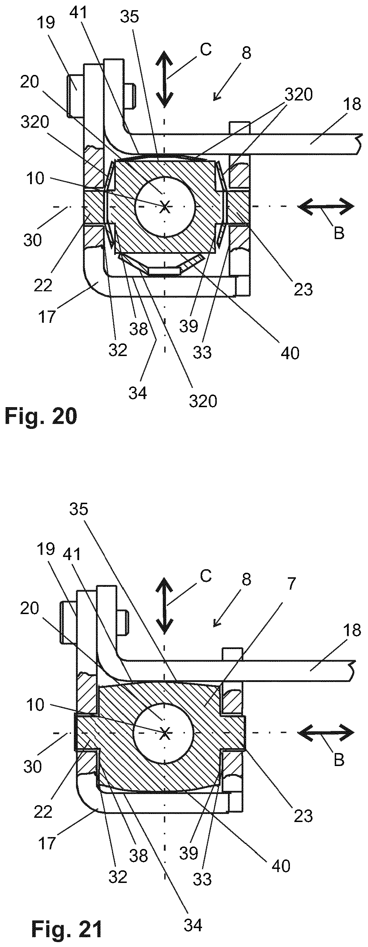

Im siebten Ausführungsbeispiel entsprechend der Figur 20 sind als federndes Element Tellerfedern 320 eingesetzt.

Im achten Ausführungsbeispiel entsprechend der Figur 21 ist veranschaulicht, wie allein die Elastizität der Blechteile 17 und 18 die Axiale Verschiebbarkeit der Spindelmutter 7 gegenüber dem Verbindungsteil 8 ermöglicht und dämpft.

In den Ausführungsbeispielen ist die Einbausituation der Spindelmutter 7 im Verbindungsteil dargestellt.

Es ist denkbar und möglich, auch die Stellmutter 15 im zweiten Verbindungsteil 151 in gleicher Weise anzuordnen. Alle oben genannten Ausführungen sind in gleicher Weise auch für die Höhenverstellung anwendbar.

Es ist denkbar und möglich, die verschiedenen Darstellungen der elastischen Elemente zu kombinieren.

## Patentansprüche

1. Verstellbare Lenksäule für ein Kraftfahrzeug, mit einer zur drehbaren Lagerung eines Spindelteils einer Lenkspindel bestimmten Manteleinheit (2), welche gegenüber einer Halteeinrichtung axial gleitend und/oder schwenkbar gelagert und mittels eines motorischen Antriebs (3) axial und/oder in einer Verschwenkungsrichtung verstellbar ist, wobei der motorische Antrieb (3) einen an der Halteeinrichtung befestigten Elektromotor (4) aufweist, der eine entlang einer Axialrichtung (A) axial ausgerichtete, an der Halteeinrichtung drehbar gelagerte und axial unverschiebbar gelagerte Gewindespindel (6) antreibt, die in eine mit der Manteleinheit (2) verbundene und mit dieser gegenüber der Halteeinrichtung axial verschiebbare Stellmutter (7) eingreift, die in einem an der Manteleinheit (2) befestigten Verbindungsteil (8) gelagert ist, um Axialkräfte von der Stellmutter (7) auf die Manteleinheit (2) zu übertragen, **dadurch gekennzeichnet, dass** die Stellmutter (7) zwischen den gegenüberliegenden inneren Führungsflächen (32 bis 37) des Verbindungsteils (8) mit Spiel geführt ist, so dass sie innerhalb der Führungsflächen (32 bis 37) in einer zur Axialrichtung (A) orthogonalen Ebene verschiebbar ist.

2. Lenksäule nach Anspruch 1, **dadurch gekennzeichnet, dass** die Stellmutter (7) zwischen einer ersten inneren Führungsfläche (32) und einer dieser gegenüberliegenden zweiten inneren Führungsfläche (33) des Verbindungsteils (8) in einer zu Axialrichtung (A) orthogonalen ersten Verschieberichtung (B) verschiebbar ist.

3. Lenksäule nach Anspruch 2, **dadurch gekennzeichnet, dass** zwischen der ersten inneren Führungsfläche (32) des Verbindungsteils (8) und einer benachbarten ersten äußeren Oberfläche (38) der Stellmutter (7) sowie zwischen der zweiten inneren Führungsfläche (33) des Verbindungsteil (8) und einer benachbarten zweiten äußeren Oberfläche der Stellmutter (7) jeweils mindestens ein Federelement (31) angeordnet ist.

4. Lenksäule nach Anspruch 2 oder 3, **dadurch gekennzeichnet, dass** die Stellmutter (7) zwischen einer dritten inneren Führungsfläche (34) und einer dieser gegenüberliegenden vierten inneren Führungsfläche (35) des Verbindungsteils (8) in einer zu Axialrichtung (A) und der ersten Verschieberichtung (B) jeweils orthogonalen zweiten Verschieberichtung (C) verschiebbar ist.

5. Lenksäule nach Anspruch 4, **dadurch gekennzeichnet, dass** zwischen der dritten inneren Führungsfläche (34) des Verbindungsteils 8 und einer benachbarten dritten äußeren Oberfläche (40) der Stellmutter (7) sowie zwischen der vierten inneren Führungsfläche (25) des Verbindungsteils (8) und einer benachbarten vierten äußeren Oberfläche (41) der Stellmutter (7) jeweils mindestens ein Federelement (31) angeordnet ist.

6. Lenksäule nach einem der Ansprüche 1 bis 3, **dadurch gekennzeichnet, dass** die Stellmutter (7) am Verbindungsteil (8) um eine zur Axialrichtung A orthogonale Achse (30) drehbar gelagert ist.

7. Lenksäule nach einem der Ansprüche 1 bis 5, **dadurch gekennzeichnet, dass** die Stellmutter (7) zwischen einer fünften inneren Führungsfläche (26) und einer dieser gegenüberliegenden sechsten inneren Führungsfläche (37) des Verbindungsteils (8) in Axialrichtung (A) verschiebbar angeordnet ist, wobei zwischen der fünften inneren Führungsfläche (36) des Verbindungsteils (8) und einer benachbarten fünften äußeren Oberfläche (52) der Stellmutter (7) sowie zwischen der sechsten inneren Führungsfläche (37) des Verbindungsteils (8) und einer benachbarten sechsten äußeren Oberfläche (53) der Stellmutter (7) jeweils mindestens ein Federelement (31) angeordnet ist.

8. Lenksäule nach einem der Ansprüche 3 bis 7, **dadurch gekennzeichnet, dass** die Federelemente (31) als Wellfeder, Tellerfeder, Spiralfeder oder Blattfeder ausgestaltet sind.

9. Lenksäule nach einem der Ansprüche 3 bis 7, **dadurch gekennzeichnet, dass** die Federelemente (31) aus Elastomer oder Gummi bestehen.

10. Lenksäule nach einem der vorhergehenden Ansprüche, **dadurch gekennzeichnet, dass** die Stellmutter (7) um eine senkrecht zur Axialrichtung (A) ausgerichteten Verschieberichtung (B) drehbar in dem Verbindungsteil (8) gelagert ist.

## Claims

1. An adjustable steering column for a motor vehicle, having a casing unit (2) which is specified for rotatably mounting a spindle part of a steering spindle and which is mounted so as to be axially sliding and/or pivotable in relation to a holding installation and by means of a motorized drive (3) is adjustable axially and/or in a pivoting direction, wherein the motorized drive (3) has an electric motor (4) which is fastened to the holding installation and which drives a threaded spindle (6) which is aligned axially along an axial direction (A) and is mounted on the holding installation so as to be rotatable and mounted so as to be axially non-displaceable, said threaded spindle (6) engaging in an adjustment nut (7) which is connected to the casing unit (2) and conjointly with the latter is displaceable axially in relation to the holding installation, said adjustment nut (7) for transmitting axial forces from the adjustment nut (7) to the casing unit (2) being mounted in a connection part (8) which is fastened to the casing unit (2), **characterized in that** the adjustment nut (7) is guided with a clearance between the opposite inner guiding faces (32 to 37) of the connection part (8) such that said adjustment nut (7) within the guiding faces (32 to 37) is displaceable in a plane orthogonal to the axial direction (A).

2. The steering column as claimed in claim 1, **characterized in that** the adjustment nut (7) in a first displacement direction (B) orthogonal to the axial direction (A) is displaceable between a first inner guiding face (32) and a second inner guiding face (33), opposite the latter, of the connection part (8).

3. The steering column as claimed in claim 2, **characterized in that** at least one spring element (31) is in each case disposed between the first inner guiding face (32) of the connection part (8) and a neighboring first outer surface (38) of the adjustment nut (7), as well as between the second inner guiding face (33) of the connection part (8) and a neighboring second outer surface of the adjustment nut (7).

4. The steering column as claimed in claim 2 or 3, **characterized in that** the adjustment nut (7) in a second displacement direction (C) which is in each case orthogonal to the axial direction (A) and to the first displacement direction (B) is displaceable between a third inner guiding face (34) and a fourth inner guiding face (35), opposite the latter, of the connection part (8).

5. The steering column as claimed in claim 4, **characterized in that** at least one spring element (31) is in each case disposed between the third inner guiding face (34) of the connection part (8) and a neighboring third outer surface (40) of the adjustment nut (7), as well as between the fourth inner guiding face (25) of the connection part (8) and a neighboring fourth outer surface (41) of the adjustment nut (7).

6. The steering column as claimed in one of claims 1 to 3, **characterized in that** the adjustment nut (7) is mounted on the connection part (8) so as to be rotatable about an axis (30) orthogonal to the axial direction (A).

7. The steering column as claimed in one of claims 1 to 5, **characterized in that** the adjustment nut (7) in the axial direction (A) is disposed so as to be displaceable between a fifth inner guiding face (26) and a sixth inner guiding face (37), opposite the latter, of the connection part (8), wherein at least one spring element (31) is in each case disposed between the fifth inner guiding face (36) of the connection part (8) and a neighboring fifth outer surface (52) of the adjustment nut (7), as well as between the sixth inner guiding face (37) of the connection part (8) and a neighboring sixth outer surface (53) of the adjustment nut (7).

8. The steering column as claimed in one of claims 3 to 7, **characterized in that** the spring elements (31) are designed as a Belleville spring, a plate spring, a helical spring, or a leaf spring.

9. The steering column as claimed in one of claims 3 to 7, **characterized in that** the spring elements (31) are composed of elastomer or rubber.

10. The steering column as claimed in one of the preceding claims, **characterized in that** the adjustment nut (7) is mounted in the connection part (8) so as to be rotatable about a displacement direction (B) which is aligned so as to be perpendicular to the axial direction (A).

## Revendications

1. Colonne de direction réglable destinée à un véhicule automobile, ladite colonne de direction comprenant une unité d'enveloppe (2) qui est destinée au montage à rotation d'une partie d'un axe de direction, qui est montée de manière coulissante axialement et/ou pivotante par rapport à un dispositif de retenue et qui est réglable axialement et/ou dans une direction de pivotement au moyen d'un entraînement à moteur (3), l'entraînement à moteur (3) comportant un moteur électrique (4) qui est fixé au dispositif de retenue et qui entraîne une broche filetée (6), laquelle est alignée axialement suivant une direction axiale (A), est montée à rotation et de manière fixe axialement sur le dispositif de retenue et s'engage dans un écrou de réglage (7), lequel est relié à l'unité d'enveloppe (2) et peut coulisser axialement avec celle-ci par rapport au dispositif de retenue et est monté dans une pièce de liaison (8), fixée à l'unité d'enveloppe (2), afin de transférer des forces axiales de l'écrou de réglage (7) à l'unité d'enveloppe (2), **caractérisée en ce que** l'écrou de réglage (7) est guidé avec jeu entre les surfaces de guidage intérieures opposées (32 à 37) de la pièce de liaison (8) de sorte qu'il puisse coulisser à l'intérieur des surfaces de guidage (32 à 37) dans un plan orthogonal à la direction axiale (A).

2. Colonne de direction selon la revendication 1, **caractérisée en ce que** l'écrou de réglage (7) peut coulisser entre une première surface de guidage intérieure (32) et une deuxième surface de guidage intérieure opposée (33) de la pièce de liaison (8) dans une première direction de coulissement (B) orthogonale à la direction axiale (A).

3. Colonne de direction selon la revendication 2, **caractérisée en ce qu'**au moins un élément à ressort (31) est disposé entre la première surface de guidage intérieure (32) de la pièce de liaison (8) et une première surface extérieure adjacente (38) de l'écrou de réglage (7) et entre la deuxième surface de guidage intérieure (33) de la pièce de liaison (8) et une deuxième surface extérieure adjacente de l'écrou de réglage (7).

4. Colonne de direction selon la revendication 2 ou 3, **caractérisée en ce que** l'écrou de réglage (7) peut être déplacé entre une troisième surface de guidage intérieure (34) et une quatrième surface de guidage intérieure (35) opposée de la pièce de liaison (8) dans une deuxième direction de coulissement (C) orthogonale à la direction axiale (A) et à la première direction de coulissement (B).

5. Colonne de direction selon la revendication 4, **caractérisée en ce qu'**au moins un élément à ressort (31) est disposé entre la troisième surface de guidage intérieure (34) de la pièce de liaison 8 et une troisième surface extérieure adjacente (40) de l'écrou de réglage (7) et entre la quatrième surface de guidage intérieure (25) de la pièce de liaison (8) et une quatrième surface extérieure adjacente (41) de l'écrou de réglage (7).

6. Colonne de direction selon l'une des revendications 1 à 3, **caractérisée en ce que** l'écrou de réglage (7) est monté sur la pièce de liaison (8) de manière rotative sur un axe (30) orthogonal à la direction axiale A.

7. Colonne de direction selon l'une des revendications 1 à 5, **caractérisée en ce que** l'écrou de réglage (7) est disposé de manière coulissante dans la direction axiale (A) entre une cinquième surface de guidage intérieure (26) et une sixième surface de guidage intérieure (37), opposée à celle-ci, de la pièce de liaison (8), au moins un élément à ressort (31) est disposé entre la cinquième surface de guidage intérieure (36) de la pièce de liaison (8) et une cinquième surface extérieure adjacente (52) de l'écrou de réglage (7) et entre la sixième surface de guidage intérieure (37) de la pièce de liaison (8) et une sixième surface extérieure adjacente (53) de l'écrou de réglage (7).

8. Colonne de direction selon l'une des revendications 3 à 7, **caractérisée en ce que** les éléments à ressort (31) sont conformés en ressort ondulé, rondelle-ressort, ressort en spirale ou ressort à lame.

9. Colonne de direction selon l'une des revendications 3 à 7, **caractérisée en ce que** les éléments à ressort (31) sont en élastomère ou en caoutchouc.

10. Colonne de direction selon l'une des revendications précédentes, **caractérisée en ce que** l'écrou de réglage (7) est monté dans la pièce de liaison (8) de manière rotative dans une direction de coulissement (B) orientée perpendiculairement à la direction axiale (A).
